Europäisches Patentamt

European Patent Office

Office européen des brevets

(11) Publication number: **0 187 627**
**A1**

## (12) EUROPEAN PATENT APPLICATION

(21) Application number: **85850367.5**

(22) Date of filing: **15.11.85**

(51) Int. Cl.⁴: **F 04 D 29/16**
**F 16 J 15/44**

(30) Priority: **12.12.84 SE 8406332**

(43) Date of publication of application:
**16.07.86 Bulletin 86/29**

(84) Designated Contracting States:
**AT DE FR GB IT SE**

(71) Applicant: **Flygt AB**
**Box 1309**
**S-171 25 Solna(SE)**

(72) Inventor: **Carlsson, Valdemar**
**Illerstigen 8**
**S-171 17 Solna(SE)**

(74) Representative: **Larsson, Sten**
**Flygt AB Box 1309**
**S-171 25 Solna(SE)**

(54) **A seal device.**

(57) The invention concerns a seal device to be arranged in the inlet to a centrifugal pump.

The seal device (6, 7, 8) consists of a ring (6) of a rigid material and at least one ring (7, 8) of an elastic material. The latter ring provides for a good sealing, even when the gap width varies.

## A SEAL DEVICE

The invention concerns a seal device for sealing the gap between a pump impeller and a surrounding non-rotating part.

At pumps having rotary impellers, for instance centrifugal pumps, where the pumped medium is sucked into the center of the impeller and leaves it at the perphery, it is important that the inlet part of the impeller is well adapted to the surrounding pump housing and that pumped medium is prevented from flowing back into the pump inlet. A back flow, caused by the higher pressure in the pump housing, means losses as well as an undesired turbulence in the inlet. In addition a concentration of pollutions may occur in the gap between the impeller and the inlet of the pump housing.

In order to obtain the necessary sealing between the impeller and the non-rotary parts, it is common to arrange a wear part made of rubber, on the non-rotary part and let the impeller be in contact with that part during rotation. In this way an effective sealing is obtained as long as the wear part is intact. When pumping liquids containing pollutions such as sand, fabric, plastic stripes etc, there is often a clogging between the seal ring and the impeller, which means frequent and expensive service stops. As the pollutions drag the impeller, the energy demand increases. This demand is further increased by flexure of the shaft which means that intermittent contacts occur between the impeller and the pump housing.

One way to solve this problem is to arrange a mechanical seal between the impeller and the housing. By designing the sealing surfaces radially, a good sealing may be obtained, even when the gap width varies, (Swedish Patent Application No 8401821-4). A disadvantage with this solution is a relatively high price and that significant energy losses may occur.

**0187627**

The purpose of this invention is thus to replace the wear parts made of rubber or the like and the mechanical seal resp by a special seal ring, preferably arranged in the pump inlet, which ring eliminates the disadvantages mentioned. This is obtained by help of the device stated in the following claims.

The invention is described more closely below with reference to the enclosed drawing.

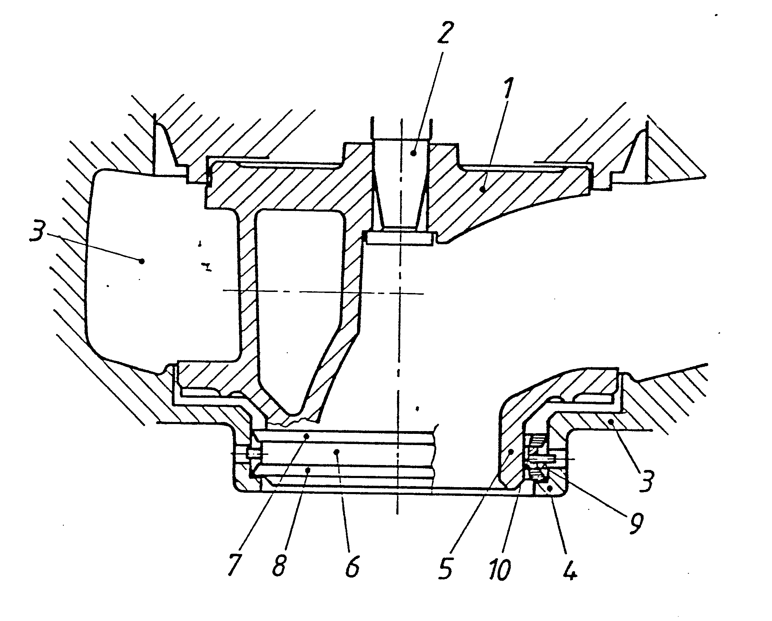

In the drawing 1 stands for an impeller on a rotatable shaft 2 in a pump housing 3. 4 and 5 stand for the inlet parts of the housing and the impeller resp. 6, 7, 8 stand for a seal ring, while 9 and 10 are gaps between the housing and the ring and the ring and the impeller resp.

As previously mentioned the pumped medium is sucked into and through the pump inlet 5 and leaves it at its periphery. In order to make it possible for the impeller to rotate freely, a certain gap is necessary between the impeller inlet and the inlet of the housing. At the same time there is an ambition to make the gap as narrow as possible in order to minimize the back flow from the inner of the pump housing caused by the pressure difference between that and the surroundings.

According to the invention a seal ring 6, 7, 8 is arranged in the gap between the impeller 1 and the pump housing 3. The ring is locked against turning, but is radially movable. The ring is so formed that it resiliently seals the gap 9 towards the housing. For that purpose at least one part 7, 8 of the ring is made of a flexible material such as rubber or soft plastic and abuts the pump housing inlet 4. This gap, the width of which may vary considerably, depending on the fact that the impeller oscillates during rotation, is then effectively sealed. The flexible part 7, 8 is then preferably formed like a tounge or has a cross section which simplifies an adaption to every momentanous gap.

The gap 10 between the seal ring and the impeller is formed with a minimum width such, that a permanent, strong abutment between the impeller and the ring never occurs.

The seal ring can for instance be composed of a rigid part 6 made of brass, cast iron of hard plastic and one or several parts 7, 8 made of a non rigid material such as rubber or soft plastic. It is however also possible to make the ring in one single part which has the requested qualities concerning adaption of the width to actual gap width.

CLAIMS

1. A device for obtaining a sealing between a rotary part, such as a pump impeller, and a non-rotary part, such as a pump housing surrounding the impeller, c h a r a c t e r i z e d in, that the gap between the two parts (1) and (3) resp is sealed by a movable seal ring (6, 7, 8), which automatically adapts its position in the gap in dependance of the width, which latter may vary depending on a flexure of the rotary shaft (2).

2. A device according to claim 1, c h a r a c t e r i z e d in, that the seal ring (6, 7, 8) divides the gap between the impeller (1) and the pump housing (3) into two gaps (9) and (10) resp, the former, the width of which may vary considerably, is sealed by one or several flexible parts (7, 8) of the seal ring while the latter gap (10) between the impeller (1) and the seal has a minimum width.

3. A device according to claim 1, c h a r a c t e r i z e d in, that the seal ring (6, 7, 8) is non-rotary but radially movable with regard to the pump housing (3).

4. A device according to claim 1, c h a r a c t e r i z e d in, that the seal ring consists of a ring (6) of a rigid material and at least one ring (7, 8) made of a flexible material.

5. A device according to claim 1, c h a r a c t e r i z e d in, that the seal ring is manufactured in one single part.

# EUROPEAN SEARCH REPORT

**0187627**
Application number

EP 85 85 0367

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A-2 296 124 (WARMAN) * Page 1, lines 1-12, 32-37; page 2, line 35 - page 3, line 38; page 5, line 9 - page 6, line 2; page 6, line 39 - page 7, line 23; figures 1-6 * | 1-5 | F 04 D 29/16 F 16 J 15/44 |
| X | US-A-4 018 544 (EBERHARDT) * Column 1, lines 3-17; column 3, line 24 - column 4, line 37; figures 2-5 * | 1-4 | |
| X | GB-A- 889 206 (SULZER) * Page 1, lines 9-42; figures 1,2 * | 1-4 | |
| X | DE-A-2 359 475 (VOGGEL) * Claims 1,2 * | 1,5 | TECHNICAL FIELDS SEARCHED (Int. Cl.4) |
| | | | F 04 D F 16 J |

The present search report has been drawn up for all claims

| Place of search | Date of completion of the search | Examiner |
|---|---|---|
| THE HAGUE | 24-03-1986 | WALVOORT B.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82